Europäisches Patentamt

European Patent Office

Office européen des brevets

(11) Publication number: **0 309 282 B1**

## EUROPEAN PATENT SPECIFICATION

(45) Date of publication of patent specification: **16.12.92**   (51) Int. Cl.⁵: **B22C 9/06**

(21) Application number: **88308885.8**

(22) Date of filing: **23.09.88**

(54) **Hot forming mold and method of manufacturing the same.**

(30) Priority: **25.09.87 JP 238778/87**
　　　　**01.12.87 EP 87310568**

(43) Date of publication of application:
**29.03.89 Bulletin 89/13**

(45) Publication of the grant of the patent:
**16.12.92 Bulletin 92/51**

(84) Designated Contracting States:
**DE ES FR GB**

(56) References cited:
**DE-A- 2 705 828**
**DE-A- 3 611 403**
**DE-C- 1 928 337**

(73) Proprietor: **ONODA CEMENT COMPANY, LTD.**
**6276, Oaza Onoda**
**Onoda-shi Yamaguchi-ken(JP)**

Proprietor: **ONODA ALC CO., LTD.**
**13-26, 1-chome, Nishiki Naka-ku**
**Nagoya-shi Aichi-ken(JP)**

(72) Inventor: **Tsukiyama, Koichi**
**G-908, Yokohama-Parktown 85-6, 3-chome**
**Matsugawa**
**Minami-ku Yokohama-shi Kanagawa-ken(JP)**

Inventor: **Takahashi, Hideaki**
**30-11, 1-chome Kongosawa**
**Sendai-shi Miyagi-ken(JP)**
Inventor: **Tsutsmi, Koichi**
**19-20, 1-chome Arai**
**Ichikawa-shi Chiba-ken(JP)**
Inventor: **Watanabe, Takashi**
**102, 1-8 Inagedai**
**Chiba-shi Chiba-ken(JP)**
Inventor: **Wada, Chiharu**
**Onodakasairyo 13-14, 2-chome Minamikasai**
**Edogawa-ku Tokyo(JP)**
Inventor: **Kunugiza, Keitaro**
**B-102, Paleshal Yagisawa 5423, Haradocho**
**Totsuka-ku Yokohama-shi Kanagawa-ken(JP)**
Inventor: **Teramura, Satoshi**
**802, 3-2, 4-chome Takasu**
**Chiba-shi Chiba-ken(JP)**

(74) Representative: **Ben-Nathan, Laurence Albert**
**et al**
**Urquhart-Dykes & Lord 91 Wimpole Street**
**London W1M 8AH(GB)**

**Description**

This invention relates to a hot forming mold excellent in heat resistance, machinability and the like, and more particularly to a hot forming mold suitable for hot gas pressure forming and a method of manufacturing the same.

DESCRIPTION OF THE PRIOR ART

The hot gas pressure forming method has various advantages in that as pressure isotropically acts, a molded article having a uniform density may be obtained, a complicated shape of a molded article can be obtained with high accuracy by a single step, the surface of a molded article is beautiful, and the like. Therefore, attention has been recently paid on this method in the field of "superplastic forming and diffusion bonding" and the like.

"Superplastic forming and diffusion bonding" has suffered much attention as the integral manufacturing technique for the airframe of an airplane. Superplastic metal sheet such as aluminum alloy, titanium alloy, two-phase stainless steel and the like is subjected to hot-forming and/or diffusion bonding by inert gas pressure at high temperature. Forming molds used must have the heat resistance capable of withstanding a forming temperature of approximately 600 °C for aluminum alloy and of approximately 1,000 °C for titanium alloy and two-phase stainless steel, and dimensional precision less than 0.5%.

In the case of sheet-like prepreg material, for example, such as glass fiber reinforced plastic (GFRP), carbon fiber reinforced plastics (CFRP), and amide fiber reinforced plastic (AFRP), attention has been paid to a so-called autoclave molding method in which these materials are laminated and then molded at gas pressure in the autoclave. In this case, the forming temperature is 120°C to 200°C, and 350°C at the maximum.

Other than the hot gas pressure forming methods described above, there is a hot forming method for glass for automobiles, where the dimensional precision and surface precision of hot forming molds are required. In this case, the hot forming mold must have heat resistance at about 800°C at the maximum and a low coefficient of thermal expansion.

In the molding techniques, the hot forming molds are required to have an excellent heat resistance, and to be large size in the order of meters. Conventional heat-resisting molds of heat-resisting alloy such as austenite stainless steel, Inconel or the like, or molds of heat resisting epoxy resin are difficult for practical uses, because expenses for manufacturing large ingots of said materials and for machining the ingots are extremely high, harmful gases occur at time of manufacturing epoxy resin molds, and there gives rise to a problem in deterioration of material characteristics in hot forming.

In view of the heat resistance, ceramic materials such as alumina, sialon and etc. are excellent material. But they are extremely difficult to manufacture large ingots and to work them.

DE-A-3,611,403 discloses low melting point metal casting equipment comprising a molded body having a xonotlite matrix with reinforcing fibres therein except for metal contact surface areas thereof.

DE-A-2,705,828 discloses shaped bodies made from a slurry of xonotlite and polyacrylic ester dispersion which is filter pressed for dewatering and shaping, and then heated to produce the shaped bodies.

SUMMARY OF THE INVENTION

This invention provides a hot forming mold and a method of manufacturing the same, of which can be easily manufactured as large ingots, is high in heat resistance, has a sufficient strength and hardness for hot forming, and provides machinability with good surface.

The invention provides a hot forming mold according to Claim 1 and a method of forming such a mold according to Claim 4 or Claim 5.

In this invention, xonotlite group, which is calcium hydrous silicates, is applied to a hot gas forming mold, the application of which is being outside the conventional common sense that hot forming mold is made of heat resisting alloy and of heat resisting epoxy resin, and that the xonotlite group is chief material of light-weight, heat insulating and fire proof calcium silicate building materials. The calcium silicate building materials have bulk density of 0.2 to 0.5 $g/cm^3$, and a bending strength of less than 50 $kgf/cm^2$ at the bulk density of about 0.5 $g/cm^3$. It is considered that the calcium silicate building materials are hardly to use as a hot forming mold.

The present inventors have found that a mold made of xonotlite group has high bending strength and hardness suitable for hot forming at the temperature ranging from 120 °C to 1200 °C, if its bulk density is 0.6 - 2.20 g/cm$^3$, and it suffered heat treatment after its production as a mold article.

That is, a hot forming mold according to this invention is characterized by being made of xonotlite group, its bulk density being 0.6 to 2.20 g/cm$^3$, bending strength being 100 kg/cm$^2$ or more, and Vickers hardness being 4 or more. The hot forming mold described above has sufficient properties, such as bending strength, Vickers hardness, and machinability with good finished surface.

The xonotlite group of this invention includes xonotlite or wollastonite transformed from xonotlite above 700 °C by heating.

The hot forming mold is formed by following two processes;

1) an aqueous slurry of xontlite is filter-pressed and dried, thereby a mold article is obtained, the mold article is then heat-treated at the temperature of less than 700 °C if necessary, and thereafter the mold article is cut, and 2) an aqueous slurry of xonotlite is filter-pressed and dried, thereby a mold article is obtained, the mold article is then heat-treated at the temperature ranging from 700 to 1200 °C, and finally the heat-treated mold is cut.

The drying described above means the drying at the temperature between 100-120°C, removing adhereing water at the surface of xonotlite. The heat-treatment means not only heating of less than 700 °C in the case of the above mentioned process (1), removing the water from unreacted xonotlite compound, but also heating at the temperature range from 700 to 1200°C in the case of the above mentioned process (2), thereby the transformation from xonotlite to wollastonite occurs. Because the equilibrium temperature of phase transformation from xonotlite to wollastonite is at about 450 °C, but its actual temperature is more than 700 °C, taking into consideration of reaction speed, heat treatment less than 700°C does not actually give rise to the phase transformation of xonotlite.

## EXPERIMENTAL EXAMPLES

Experiment was conducted to evaluate the availability of the mold of xonotlite group as a hot forming mold, and the results will be described in detail.

## EXPERIMENTAL EXAMPLE 1

Bending strength, Vickers hardness, machinability, and change in dimension were measured on small test specimens to evaluate if the mold of xonotlite group is satisfied with these properties required as a hot forming mold. Table 1 shows the results of measurements and, on these basis, the judgement for the availability as a hot forming mold.

The test specimens were prepared as follows. An aqueous slurry of industrially produced xonotlite was filter-pressed to give a mold article of 15 cm X 8 cm X 1 cm in size. Bulk density of the mold article was controled to 0.5, 0.7, 0.9, 1.0 and 1.2 g/cm$^3$ by varying filter-pressing load. The mold articles were thereafter dried at 120°C for 12 hours, giving rise to the test specimens.

The test spcimens were also formed by the heat-treatment of dried mold articles at the respective temperature of 300, 600, 800, 1000, 1100 and 1200 °C for 12 hours, where temperature increased at 100°C/hour and decreased in a furnace.

The temperature of heat-treatment was selected, according to the kinds of material to be hot formed.

1. 300°C for plastic forming mold
2. 600°C for aluminum alloy superplastic forming mold
3. 800 °C for glass forming mold
4. 1000°C for titanium alloy superplastic forming mold
5. 1100°C for 2-phase stainless steel superplastic forming mold
6. 1200°C as maximum using temperature for a hot forming mold

Large shrinkage occured at the temperature of 800, 1000, 1100 and 1200 °C, and this is because of the transformation from xonotlite to wollastonite. After heat-treatment, however, the shrinkage percentage is 0.5 or less and marked by *.

Machinability was evaluated using a longitudinal type milling machine with an end mill made of high speed steel of 22 mm in diameter, and done in terms of the roughness of machined surface and of machining time with varying the depth of cut, feed speed and rotation speed.

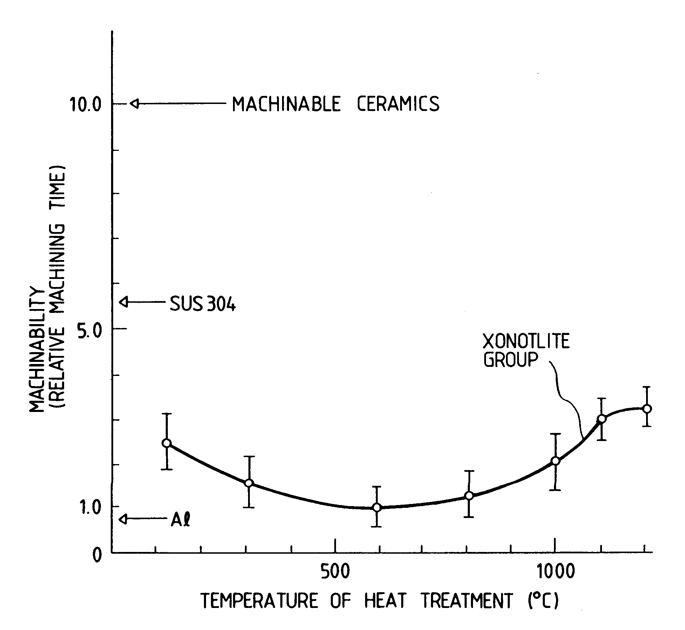

Fig. 1 shows the relationship between the temperature of heat treatment and the relative machining time. In this figure, the relative machining time of aluminum, stainless steel (SUS304) and machinable ceramics (Macor) were also shown for comparison.

It is indicated that the machinability of the hot forming mold according to this invention is equal to that of aluminum or about 60% of SUS 304, and the hot forming mold is far excellent in machinability than

machinable ceramics.

Table 1

| Tempe-rature °C | Bulk Density g/cm³ | Shrinkage percentage in a direction of plate-thickness % | Bending strength kgf/cm² | Vickers hardness | Machinability | | Availability as a hot mold |
|---|---|---|---|---|---|---|---|
| | | | | | Relative machining time | Surface precision | |
| 120 | 0.460 | | 31 | 1.1 | △ | √√√ | Not available |
| | 0.710 | | 156 | 4.1 | △ | √√√ | Available |
| | 0.909 | | 186 | 8.5 | △ | √√√ | Available |
| | 0.953 | | 194 | 11 | △ | √√√ | Available |
| 300 | 0.441 | 0.29 | 59 | 1.1 | ○ | √√√ | Not available |
| | 0.692 | 0.49 | 136 | 4.1 | △ | √√√ | Available |
| | 0.889 | 0.30 | 172 | 8.5 | ○ | √√√ | Available |
| | 0.980 | 0.30 | 173 | 11 | ◉ | √√√ | Available |
| 600 | 0.456 | 0.29 | 75 | 1.2 | ◉ | √√√ | Not available |
| | 0.663 | 0.34 | 135 | 4.2 | ◉ | √√√ | Available |
| | 0.848 | 0.17 | 164 | 8. | ○ | √√√ | Available |
| | 0.982 | 0.23 | 175 | 12.5 | ○ | √√√ | Available |

EP 0 309 282 B1

| Temperature °C | Bulk Density g/cm³ | Shrinkage percentage in a direction of plate-thickness % | Bending strength kgf/cm² | Vickers hardness | Machinability | | Availability as a hot forming mold |
|---|---|---|---|---|---|---|---|
| | | | | | Relative machining time | Surface precision | |
| | 0.450 | 2.32* | 52 | 1.15 | ◐ | ∇∇∇ | Not available |
| 800 | 0.679 | 2.78* | 114 | 4.2 | ◑ | ∇∇∇ | Available |
| | 0.867 | 3.72* | 167 | 9.2 | ○ | ∇∇∇ | Available |
| | 0.967 | 3.87* | 172 | 14.0 | ○ | ∇∇∇ | Available |
| | 0.467 | 4.44* | 36 | 1.15 | ○ | ∇∇∇ | Not available |
| 1000 | 0.703 | 12.2 * | 68 | 4.2 | ○ | ∇∇∇ | Not available |
| | 0.949 | 14.8 * | 118 | 9.0 | △ | ∇∇∇ | Available |
| | 1.077 | 9.9 * | 125 | 18.0 | △ | ∇∇∇ | Available |
| | 0.500 | 5.5 * | 30 | 15.0 | △ | ∇∇∇ | Not available |
| 1100 | 0.720 | 15.0 * | 60 | 25.0 | △ | ∇∇∇ | Not available |
| | 0.980 | 20.5 * | 105 | 40.0 | △ | ∇∇∇ | Available |
| | 1.100 | 15.5 * | 120 | 50.0 | △ | ∇∇∇ | Available |
| 1200 | 1.320 | 33.1 * | 158 | 15.7 | △ | ∇∇∇ | Available |
| | 1.900 | 25.6 * | 208 | 51.5 | △ | ∇∇∇ | Available |

EP 0 309 282 B1

NOTE ON TABLE 1:

1. The shrinkage percentage in a direction of plate-thickness represents shrinkage during the heat-treatment of 120 °C-dried mold articles.

The shrinkage percentage in lengthwise and widthwise is less than 1/2 of that of a direction of plate-thickness, and is not represented here.

The shrinkage after heat-treatment at 800°C to 1200°C is 0.5 or less, and is marked by *

2. The bending strength was measured at room temperature and high temperature, and there is no difference between them. Only the bending strength at room temperature is shown as representative value.

3. The relative machining time is normarized by that of the test specimen of a bulk density of 0.663 g/cm$^3$ with 600°C-heat-treatment, and is represented by ⊚ for 0.7 to 1, by ◯ for 1 to 2 and by △ for 2 to 4.

4. ∇∇∇ is the symble of Japanese Industrial standard, and indicates the surface roughness within the range of +- 0.8 to 0.23 microns.

EXPERIMENTAL EXAMPLE 2

One of important properties required as a hot forming mold is thermal shock resistance.

To evaluate the thermal shock resistance, the two experiments, measuring acoustic emission (AE) and measuring bending strength and Vickers hardness, were conducted on the test specimen that suffered following thermal cycles.

(1) Temperature increased from a room temperature up to 600°C for thirty minutes, kept constant for thirty minutes, and thereafter decreased to 50°C for five hours (1 cycle), and

(2) It increased from 50°C to 600°C for thirty minutes, kept constant for thirty minutes, and therafter decreased to 50°C for five hours (2 cycle). Thereafter, the operation of (2) was repeated (3 cycle and thereafter).

A test specimen used in the experiment was a 120°C-15 hours dried mold article having a bulk density of 0.70 g/cm$^3$ and bending strength of 136 kgf/cm$^2$.

First, the occurrence of microcracks resutled from the thermal shock was detected under aforesaid temperature by using AE method. In the 1 cycle, a few AE was detected, and the energy of AE was very small. In the 2 cycle and thereafter, no AE has occurred. After the measurement of AE, the specimen was observed under the scanning electron microscope, and no crack was found.

The influence of thermal shock was also evaluated by measuring the bending strength and Vickers hardness of the test specimen, the results of which are given in Table 2.

6

Table 2

|  | Bulk density (g/cm$^3$) | Bending strength (kgf/cm$^2$) | Vickers hardness |
|---|---|---|---|
| 120 C-15 hrs dried article | 0.70 | 136 | 5.3 |
| 1 cycle | 0.69 | 115 | 5.3 |
| 2 cycle | 0.69 | 120 | 5.2 |
| 20 cycle | 0.68 | 112 | 4.8 |
| 40 cycle | 0.69 | 121 | 5.0 |
| 100 cycle | 0.70 | 127 | 5.2 |

Table 2 shows that the hot forming mold of the present invention is not lowered in bending strength and Vickers hardness despite such thermal cycles, and therefore has the excellent thermal shock resistance.

The results of Experimental Examples 1 and 2 indicate that the mold of xonotlite group, having a bulk density of 0.6 to 2.20 g/cm$^3$, bending strength of 100 kgf/cm$^2$ or more, and Vickers hardness of 4 or more, are small in change in dimentional with temperature, good in machinability, good in the property of finished surface, and excellent in thermal shock resistance, and therefore they can be widely used as a hot forming mold.

The hot forming mold according to this invention is manufactured by filter-pressing and drying of an aqueous slurry of xonotlite, thereafter heating of the obtained mold article at a working temperature of hot forming of 700°C or less, and then cutting. This can be used for plastic forming mold or aluminum alloy superplastic forming one.

In the case where the hot forming mold is used at the temperature from 700°C to 1200°C as glass forming mold, titanium alloy superplastic forming mold and 2-phase stainless steel superplastic forming mold, the mold article is heat-treated at a level above the working temperature of hot forming, after which it is cut to obtain a hot forming mold.

BRIEF DESCRIPTION OF THE DRAWING

The figure shows the relationship between the temperature of the heat-treatment and the machinability of the hot forming mold.

DETAILED DESCRIPTION OF THE PREFERRED EMBODIMENTS

EMBODIMENT 1

A hot forming mold for practical aluminum superplastic forming was formed.

A mold article of 40 cm X 40 cm X 10 cm was obtained by filter-pressing of an aqueous slurry of xonotlite. The filter-pressing speed and load were several mm/minute and about 40 kg/cm$^2$, respectively.

Two types of hot forming mold were obtained. One was formed by drying of the mold article at 120°C, and the other was dried at 120°C and thereafter heat-treated at 600°C, wherein temperature increased at 150°C/hr, kept constant for 12 hours and decreased in a furnace. Various properties and machinability of the two kinds of mold are given in Table 3.

The above-described two kinds of hot forming mold were used. Aluminum superplastic forming was controlled as follows; the retaining temperature of 550°C, retaining time of 3 hours, inert gas pressure of 3 kg/cm$^2$ or so, and the load of the iron top cover of the hot forming machine of 40 kg/cm$^2$. Inside of a hot forming machine was vaccumed up to about $10^{-1}$ Torr before heating.

Aluminum alloy molded articles obtained by this mold have equal dementional precision to that by conventional austenite stainless steel molds. Parting compound was required for conventional mold, but no such compound was necessary for this mold.

EMBODIMENT 2

A mold article obtained in the same method as that of embodiment 1 was used to prepare the mold for practical titanium alloy superplastic forming.

The mold article was dried at 120°C and futher heat-treated

7

Table 3

| Embodiment | Heat-treatment | Bulk density g/cm³ | Shrinkage % in direction of plate-thickness(%) | Bendings strength kgf/cm² | Vickers hardness | machinability | | | | |
|---|---|---|---|---|---|---|---|---|---|---|
| | | | | | | Cut amount mm | Feed mm/min | RPM rpm | Surface precision | Relative machining time |
| 1 | 120°C dried | 0.909 | | 182 | 8.5 | 1.0 | 60 | 620 | ∨∨∨ | 2.0 ~2.5 |
| | 600°C treatment | 0.848 | 0.17 | 167 | 8.4 | 5.0 | 60 | 1000 | ∨∨ | 1.0 |
| 2 | 1000°C treatment | 0.848 | —0.30* | 118 | 9.0 | 1.0 | 60 | 620 | ∨∨∨ | 2.0 |

* : Expansion at 1000°C

at 1000 °C (temperature rising speed of 150°C/hr in furnace, retaining time of 12 hr and cooling in furnace), after that hot forming mold was obtained. Various properties and machinability of the mold are given in Table 3.

This mold was used to practical titanium alloy superplastic forming. The molding was carried out with inert gas of 10 to 20 kg/cm² for about one to three hours while maintaining the temperature at more or less 1000°C with a temperature being increased at 100°C every hour under the vaccum of about $10^{-4}$ Torr.

8

The load of the iron top cover of the forming machine was about 300 kg/cm$^2$.

Titanium alloy molded article made with this mold shows a dimensional precision equal to that with heat resisting stainless steel (SUS 316) or heat resisting alloy (Inconel or Hastelloy) mold. No parting compound coating was necessary in this mold.

EMBODIMENT 3

A forming mold was obtained by cutting a mold article obtained by the same method as that of Enbodiment 1 and by dring at 120°C, and other forming mold was obtained by cutting a mold article obtained by the same method as that of Embodiment 1 and by heat treatment at 350°C (temperature rising speed of 100 C/hour in furnace, retaining time of 12 houres and cooling in furnace). They were used as a plastic prepreg autoclave forming mold.

Plural layers of sheet-like glass fiber strengthning epoxy materials are laminated on the present mold, covered with sealing sheet and then pressed with reduced pressure under vaccum of about $10^{-3}$ Torr, after which it retained for about one hour at inert gas pressure of 5 kg/cm$^2$ at around 200°C and molded.

A plastic molded articles made with these molds show dimensional precision equal to that with a conventional hardening epoxy resin (two liquid mixed type) mold.

It is noted that epoxy molds have many inconveniences such as deterioration in heat resistance, generation on harmful gases at producing epoxy resin, and heavy weight in case of large molds.

EMBODIMENT 4

A mold article obtained by same method as that of Embodiment 1 was dried at 120°C and further heat treated at 750°C (temperature rising speed of 150°C/hr in furnace, retaining time of 12 hours, and cooling in furnace), after which it was cut to prepare a press mold of male and female for molding automobile glass (mainly, front glass).

In actual molding for automobile front glass, the molding precision is within +-0.1 mm or so. In conventional method, heat-resisting stainless steel was used for the press male mold and female one. As the heat-resisting stainless steel has the coefficient of thermal expansion of 18 to 20x$10^{-6}$/ C or so, the temperature of the mold was controlled homogeneously. The mold according to this invention was used and deep-bending molding was carried under several kg/cm$^2$ of pressure load, as consequence of which molding could be accomplished with the dimensional precision within +- 0.1 mm without particularly carrying out the control of temperature.

EFFECT OF THE INVENTION

The hot forming mold according to this invention has remarkable effects not obtained by conventional molds.

(1) The hot forming mold of xonotlite group can withstand under high temperature up to 1200°C, has sufficient bending strength and surface hardness for hot forming, is easy machining, and has a good precision of finished surface. It can be obtained at low cost.

(2) Since this mold is obtained by filter-press of aqueous slurry, a large mold article can be easily produced. A considerable cost-down of manufacturing and machining a large hot forming mold can be realized.

(3) As the mold of this invention is light in weight as compared with conventional hot forming molds and parting compound is not required, handling is easy. Harmful gases are not generated. In addition, the bulk density can be selected according to the molding condition, and in the case where the conditions are not severe, light-weight mold can be provided.

**Claims**

1. A mold made of xonotlite group material, characterized in that the mold is a hot forming mold whose bulk density is 0.6 to 2.20 g/cm$^3$: bending strength is 100 kgf/cm$^2$ or more; and Vickers hardness is 4 or more.

2. A hot forming mold according to Claim 1, wherein the xonotlite group material is xonotlite.

3. A hot forming mold according to Claim 1, wherein the xonotlite group material is wollastnite transformed

EP 0 309 282 B1

from xonotlite by heating at a temperature of 700°C or more.

4. A method for manufacturing a mold from an aqueous slurry of xonotlite characterized by producing a hot forming mold by comprising filter pressing of an aqueous slurry of xonotlite, and thereafter drying to remove moisture of the obtained mold article and cutting.

5. A method for manufacturing a mold from an aqueous slurry of xonotlite according to claim 4, heat treating the formed article further characterized by heat-treating the mold article at a temperature of more than 700°C but less than 1200°C.

**Patentansprüche**

1. Form aus einem xonotlitischen Gruppenmaterial, dadurch **gekennzeichnet,** daß die Form eine Heißform ist, deren Bulkdichte zwischen 0,6 und 2,2 g/cm$^3$ beträgt, während die Biegefestigkeit 100 kg/cm$^2$ oder mehr und die Vickershärte 4 oder mehr betragen.

2. Heißform nach Anspruch 1, dadurch **gekennzeichnet,** daß das xonotlitische Gruppenmaterial Xonotlit ist.

3. Heißform nach Anspruch 1, dadurch **gekennzeichnet,** daß das xonotlitische Gruppenmaterial ein Wollastonit ist, welcher durch einen Wärmebehandlungsprozeß bei Temperaturen von 700°C und mehr aus Xonotlit umgewandelt worden ist.

4. Verfahren zur Herstellung einer Form aus einer wäßrigen Aufschwemmung von Xonotlit, dadurch **gekennzeichnet,** daß die Heißform durch Filteroressung einer wäßrigen Aufschwemmung von Xonotlit hergestellt wird, worauf ein Trocknungsvorgang erfolgt, um die Feuchtigkeit des erhaltenen Artikels zu entfernen, worauf schließlich ein Schneidvorgang erfolgt.

5. Verfahren zur Herstellung einer Form aus einer wäßrigen Aufschwemmung von Xonotlit, gemäß Anspruch 4 unter Einschluß einer Wärmebehandlung des hergestellten Artikels, dadurch **gekennzeichnet,** daß die Wärmebehandlung des Formartikels bei Temperaturen von mehr als 700°C, jedoch weniger als 1200°C erfolgt.

**Revendications**

1. Moule constitué d'un matériau du groupe des xonotlites, caractérisé en ce que le moule est un moule de façonnage à chaud dont la densité apparente est de 0,6 à 2,20 g/cm$^3$, la résistance à la flexion est de 100 kgf/cm$^2$ ou davantage et la dureté Vickers est de 4 ou davantage.

2. Moule de façonnage à chaud selon la revendication 1, dans lequel le matériau du groupe des xonotlites est la xonotlite.

3. Moule de façonnage à chaud selon la revendication 1, dans lequel le matériau du groupe des xonotlites est la wollastonite obtenue par transformation de la xonotlite par chauffage à une température de 700°C ou davantage.

4. Procédé de fabrication d'un moule à partir d'une bouillie aqueuse de xonotlite, caractérisé par la production d'un moule de façonnage à chaud consistant à comprimer sur filtre une bouillie aqueuse de xonotlite, puis à la sécher pour éliminer l'humidité de l'article pour moule obtenu et à le découper.

5. Procédé de fabrication d'un moule à partir d'une bouillie aqueuse de xonotlite selon la revendication 4, comprenant le traitement thermique de l'article préparé, caractérisé en outre par un traitement thermique de l'article pour moule à une température supérieure à 700°C, mais inférieure à 1200°C.

10